# EUROPÄISCHE PATENTSCHRIFT

(11) **EP 1 035 313 B1**
(45) Veröffentlichungstag und Bekanntmachung des Hinweises auf die Patenterteilung: **29.10.2003**
(21) Anmeldenummer: 00102025.4
(22) Anmeldetag: 02.02.2000
(51) Int. Cl.: F02D 41/14, F02D 33/02, F02D 41/02

(54) **Verfahren und Vorrichtung zur Abgastemperaturerhöhung**
Method and apparatus for increasing the exhaust gas temperature
Méthode et dispositif pour augmanter la temperature des gaz d'echappement

(30) Priorität: 05.03.1999 DE 19909796
(43) Veröffentlichungstag der Anmeldung: 13.09.2000
(73) Patentinhaber: Bayerische Motoren Werke Aktiengesellschaft, 80809 München (DE)
(72) Erfinder: Rubbert, Stephan, Dr., 81737 München (DE)

(56) Entgegenhaltungen:
- EP-A- 0 492 989
- EP-A- 0 893 154
- GB-A- 2 301 459
- PATENT ABSTRACTS OF JAPAN vol. 010, no. 299 (M-524), 11. Oktober 1986 (1986-10-11) & JP 61 112715 A (TOYOTA MOTOR CORP), 30. Mai 1986 (1986-05-30)

## Beschreibung

Die Erfindung betrifft ein Verfahren und eine Vorrichtung zur Abgastemperaturerhöhung gemäß dem Oberbegriff des Anspruchs 1 bzw. 7.

Beim Betrieb eines Verbrennungsmotors ist eine geschichtete Direkteinspritzung bekannt. Um einen solchermaßen betriebenen Verbrennungsmotor handelt es sich vorliegend. Bei der geschichteten Direkteinspritzung bewirkt ein ungedrosselter Betrieb bei niedriger Teillast oder im Leerlauf, daß die Abgastemperatur auf Werte unterhalb 200°C fällt. Bei Verwendung eines Katalysators im Abgasstrang führt dies im Dauerbetrieb zu einer Auskühlung des Katalysators, so daß dieser unwirksam wird.

Zur Temperaturerhöhung ist es aus der JP 10054287 A bekannt, den Zündzeitpunkt zu verstellen. Eine Abgastemperaturerhöhung bei einem Verbrennungsmotor mit geschichtetem Betrieb ist durch eine Verstellung des Zündzeitpunktes in Richtung einer späten Zündung jedoch nur eingeschränkt möglich, da ein größerer Abstand zwischen dem Einspritzende und der Zündung zu Zündaussetzern und einer instabilen Verbrennung führt.

Eine generelle Drosselung hingegen führt zu einem schlechteren Wirkungsgrad aufgrund steigender Ladungswechselverluste und einem geringen Verbrennungswirkungsgrad.

Ferner ist aus der EP 0 492 989 A1 ein Abgasreinigungssystem für einen Dieselmotor mit Katalysator bekannt.

Aus der GB 2 301 459 A ist darüber hinaus ein Verfahren zur Steuerung eines Motors mit Direkteinspritzung bekannt, bei dem zur Erhöhung der Abgastemperatur zusätzliche Zündungen innerhalb eines Taktzyklus initiiert werden.

Aufgabe der Erfindung ist es, ein Verfahren und eine Vorrichtung der eingangs genannten Art anzugeben, mit dem bzw. mit der die Abgastemperatur bedarfsgerecht erhöht werden kann, wobei gleichzeitig im kurzzeitigen Leerlauf oder im niedrigen Teillastbetrieb der gute Wirkungsgrad eines ungedrosselten Schichtbetriebs genutzt werden sollte.

Diese Aufgabe wird durch die im Anspruch 1 bzw. 7 angegebenen Merkmale gelöst.

Demgemäß erfolgt eine Anhebung der Abgastemperatur durch eine Drosselung lediglich dann, wenn ein Abgastemperaturschwellwert unterschritten ist, wobei während des geschichteten Betriebs des Verbrennungsmotors überprüft wird, ob die Drosselung zur Temperaturanhebung ausreicht. Ist dies nicht der Fall, so wird in einer zweiten Stufe auf einen homogenen Betrieb des Verbrennungsmotors umgeschaltet.

Vorzugsweise kann die Drosselung zeit- und/oder temperaturgesteuert erfolgt, so daß die Stärke der Drosselung auf die jeweiligen Betriebsbedingungen anpaßbar ist.

Gemäß einer vorzugsweisen Ausführungsform der Erfindung kann es sich bei der Katalysatoreinrichtung um Vorkatalysatoren handeln, denen als Einrichtung zur Ermittlung der Abgastemperatur beispielsweise Temperatursonden nachgeschaltet sind. Diesen Vorkatalysatoren wiederum kann ein Speicherkatalysator (z. B. NOₓ-Speicherkatalysator) nachgeschaltet werden, der während seiner Regenerationsphase mittels einer Monitorsonde überprüft wird. Die Überprüfung kann durch Auswertung des Lambda-Sprunges erfolgen.

Um die Wirksamkeit der Katalysatoren allgemein zu erfassen, können auch ODB-Sensoren der Motorsteuerung eingesetzt werden (beispielsweise eine Lambda-Sonde, ein NOₓ-Sensor oder ein Abgastemperatursensor).

Zusätzlich kann noch der Vorzündwinkel zur Anhebung der Temperatur im Abgasstrang verringert werden. Um bereits im Vorfeld auf Einflußfaktoren reagieren zu können, die auf die Katalysatortemperatur Einfluß haben, kann der Abgastemperatur-Schwellwert als eine Funktion der Fahrzeugbetriebsoder Fahrzeugumgebungsbedingungen angepaßt werden. Insbesondere ist eine Anpassung in Abhängigkeit der Umgebungstemperatur und der Fahrzeuggeschwindigkeit möglich. Mit dieser Maßnahme wird beispielsweise beim rollenden Fahrzeug (z. B. bei Bergabfahrten) das schnelle Auskühlen des Speicherkatalysators durch vorzeitige Maßnahmen zur Temperaturerhöhung verhindert. Zusätzlich könnte noch der Temperaturgradient ausgewertet werden. Auch kann bei einem starken Temperaturabfall im Katalysator der Motor direkt auf einen homogenen Betrieb umgeschaltet werden.

Insgesamt ergibt sich mit dem vorliegenden erfindungsgemäßen Verfahren und der Vorrichtung zur Durchführung eines solchen Verfahrens eine einfache und kostengünstige Möglichkeit einer bedarfsgerechten Temperaturerhöhung, mit dem sowohl ein Auskühlen des Katalysators verhindert als auch der gute Wirkungsgrad eines im ungedrosselten Schichtbetrieb betriebenen Motors aufrechterhalten wird.

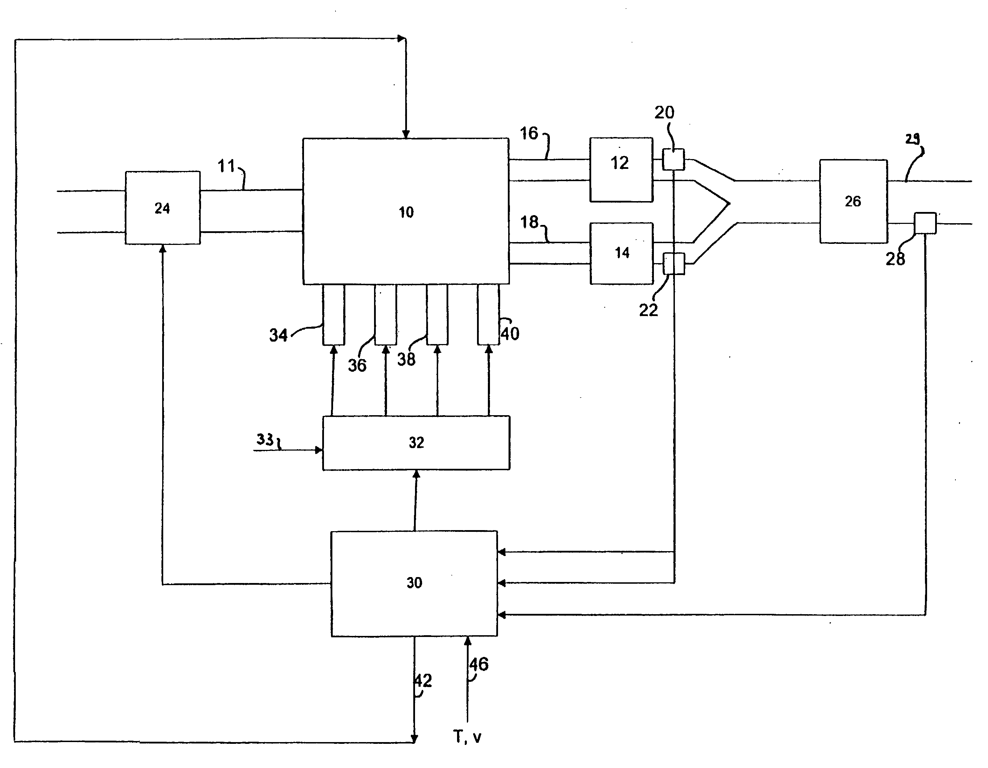

Eine konkrete Ausführungsform der Erfindung wird nachfolgend mit Bezug auf die einzige Zeichnung näher beschrieben.

Die Zeichnung zeigt in schematischer Weise einen Verbrennungsmotor 10 mit einem Ansaugkanal 11 und zwei Abgasleitungen 16, 18, die in einen gemeinsamen Abgaskanal 29 münden. In den zwei Abgassträngen 16 und 18 sind jeweils ein Vorkatalysator 12 und 14 angeordnet. Hinter jedem Vorkatalysator 12, 14 ist ein Abgastemperatursensor 20, 22 vorgesehen, der sein Signal an eine Steuereinheit 30 abgibt.

Nach der Zusammenführung der beiden Teilstränge 16 und 18 ist ein NOₓ-Speicherkatalysator im Abgaskanal 29 angeordnet, dem wiederum eine Monitorsonde 28 nachgeschaltet ist. Die Monitorsonde kann den Speicherkatalysator während seiner Regenerationsphase überprüfen und gibt ihr Signal ebenfalls an die Steuereinheit 30 ab. Durch Auswertung des Lambda-Sprungs der Monitorsonde 28 wird die Überprüfung durchgeführt.

Im Einlaßkanal 11 ist eine Drosseleinrichtung 24 mit einer verstellbaren Drosselklappe angeordnet. Die Drosseleinrichtung 24 wird u. a. von der Steuereinrichtung 30 beaufschlagt. Natürlich kann die Drosseleinrichtung 24 auch zusätzlich von einer weiteren Steuereinrichtung beaufschlagt werden, was vorliegend jedoch nicht dargestellt ist.

Die Steuereinrichtung 30 ist zudem noch mit einer Einspritzsteuerung 32 verbunden, welche auch noch von anderen Steuereinheiten Informationen (Pfeil 33) erhält. Entsprechend der von der Einspritzsteuerung 32 berechneten Einspritzvorgänge werden Informationen an Einspritzdüsen 34 bis 40 abgegeben, die entsprechend Kraftstoff von einer (nicht dargestellten) Kraftstoffleitung in die Verbrennungsräume einbringen.

Femer ist eine Verbindung 42 zwischen der Steuereinrichtung 30 und dem Motor 10 vorgesehen, über welche weitere Informationen, beispielsweise bezüglich der zu wählenden Ventilspreizung oder Zündzeitpunktverstellung, direkt an den Motor gegeben werden.

Gemäß der vorliegenden Erfindung wird der Verbrennungsmotor als Direkteinspritzmotor im geschichteten Betrieb gefahren. Der ungedrosselte Schichtbetrieb führt zu einem guten Wirkungsgrad und damit zu einem niedrigen Kraftstoffverbrauch.

Allerdings kann es bei einem Leerlaufbetrieb oder einem niedrigen Teillastbetrieb zu Abgastemperaturwerten unterhalb von 200°C kommen. In diesem Bereich kühlt der Katalysator aus, fällt unter seine Konvertierungstemperatur und wird damit unwirksam. Um dies zu vermeiden, soll die Abgastemperatur stetig oberhalb eines vorgegebenen Temperatur-Schwellwertes gehalten werden. Dies wird von der Steuereinheit 30 durch die Bewertung der von den Abgastemperatursensoren 20 und 22 gelieferten Signale ermittelt. Fällt nun die Abgastemperatur unter einen vorbestimmten Schwellwert, so gibt die Steuereinheit 30 ein Signal an die Drosseleinrichtung 24 ab. Dieses Signal ist zeit- und temperaturgesteuert und bewirkt bei der Drosseleinrichtung 24 eine Drosselung der Luftzufuhr, was zu einer Erhöhung der Abgastemperatur führt. Wie bereits angemerkt, kann die Stärke der Drosselung temperaturabhängig gewählt werden.

Ferner können bei der Ermittlung des Abgastemperatur-Schwellwertes Fahrzeugbetriebs- und -umgebungsparameter berücksichtigt werden. Beispielsweise kann der Abgastemperatur-Schwellwert in Abhängigkeit von der Umgebungstemperatur und der Fahrgeschwindigkeit gewählt werden. Damit läßt sich beispielsweise bei niedriger Umgebungstemperatur und rollendem Fahrzeug eine schnelle Auskühlung des Katalysators verhindern. Als vorbeugende Maßnahme zur Verhinderung einer Auskühlung kann eine vorzeitige Erhöhung des Temperaturschwellwertes gewählt werden. Zusätzlich kann der Temperaturgradient ausgewertet werden.

Während des gedrosselten Schichtbetriebes des Verbrennungsmotors werden von der Steuereinheit 30 die Signale der Abgastemperatursensoren 20 und 22 überwacht und es wird festgestellt, ob die Androsselung im geschichteten Betrieb zu einer ausreichenden Erhöhung der Abgastemperatur führt. Ist dies nicht der Fall, so erfolgt eine Umschaltung auf einen homogenen Betrieb des Verbrennungsmotors mit stöchiometrischer Verbrennung. Entsprechend werden die Einspritzsteuerung 32 wie auch die übrigen Motorelemente wie Einlaß-, Auslaßventilsteuerung betrieben.

Reicht diese Maßnahme immer noch nicht aus, was durch eine fortwährende Überprüfung der Signale der Abgastemperatursensoren 20 und 22 festgestellt werden kann, so wird zusätzlich noch eine Verschiebung der Zündung in Richtung Spätzündung als auch eine Verringerung des Vorzündwinkels herbeigeführt. Zu diesem Zweck gibt die Steuereinrichtung 30 an den Motor 10 bzw. dessen Motorsteuerungen ein entsprechendes Signal oder Signale ab.

Durch die vorgeschlagene Regelung bzw. die erfindungsgemäße Vorrichtung sollte bei Unterschreiten eines Abgastemperatur-Schwellwertes an den Temperatursonden nach den Vorkatalysatoren das Abgastemperatumiveau durch Androsselung angehoben werden. Damit kann man bei einem kurzzeitigen Leerlauf oder im niedrigen Teillastbereich den ungedrosselten Schichtbetrieb weiter nutzen, was zu einer Kraftstoffeinsparung führt. Erst bei einer längeren Leerlaufphase oder einer längeren Phase eines niedrigen Teillastbetriebs, also wenn die Katalysator-Temperatur beispielsweise unter 200°C fällt, findet eine Androsselung statt. Diese ist jedoch entweder zeitgesteuert oder wird nur solange durchgeführt, bis der Abgastemperaturschwellwert wieder überschritten wird. Erst als zusätzlicher Schritt wird auf einen homogenen Betrieb mit stöchiometrischer Verbrennung und Lambda-Regelung umgeschaltet, falls die Drosselung nicht ausreichen sollte. In diesem Fall arbeiten die beiden Vorkatalysatoren als konventionelle Dreiwege-Katalysatoren, die alle Schadstoffkomponenten konvertieren. Die Wirksamkeit des vorliegend verwendeten NOₓ-Speicherkatalysators ist in diesem Betriebszustand dann nicht erforderlich. Somit könnte die Überwachung des Speicherkatalysators an diesem Betriebszustand entfallen. Für eine weitere Abgastemperaturerhöhung kann schließlich in einem dritten Schritt der Vorzündwinkel bei Bedarf verringert werden.

Insgesamt wird somit eine Abgastemperaturregelung erreicht, die wirkungsgrad- und emissionsoptimiert ist.

## Patentansprüche

1. Verfahren zur Abgastemperaturerhöhung bei einem Verbrennungsmotor mit einer Katalysatoreinrichtung, bei dem der Kraftstoff direkt eingespritzt wird, die Frischluftzufuhr mittels einer Drosseleinrichtung regelbar ist und die Abgastemperatur mittels einer Temperatursonde oder eines Temperaturmodells bestimmt wird, wobei der Verbrennungsmotor zunächst im geschichteten Betrieb arbeitet,
**dadurch gekennzeichnet, daß**
- bei Unterschreiten eines Abgastemperatur-Schwellwertes eine Drosselung des Verbrennungsmotors zur Anhebung der Abgastemperatur erfolgt und
- überprüft wird, ob die Drosselung zur Temperaturanhebung ausreicht und verneinendenfalls auf einen homogenen Betrieb des Verbrennungsmotors umgeschaltet wird.

2. Verfahren nach Anspruch 1,
**dadurch gekennzeichnet,**
**daß** die Drosselung zeit- und/oder temperaturgesteuert erfolgt.

3. Verfahren nach Anspruch 1 oder 2,
**dadurch gekennzeichnet,**
**daß** ein einem Vorkatalysator nachgeschalteter Speicherkatalysator während der Regenerationsphase mit einer Monitorsonde überwacht wird.

4. Verfahren nach einem der vorhergehenden Ansprüche,
**dadurch gekennzeichnet,**
**daß** zusätzlich der Zündwinkel verringert wird.

5. Verfahren nach einem der vorhergehenden Ansprüche,
**dadurch gekennzeichnet,**
**daß** der Abgastemperatur-Schwellwert als Funktion von Fahrzeugbetriebsoder Fahrzeugumgebungsbedingungen gewählt wird.

6. Verfahren nach einem der vorhergehenden Ansprüche,
**dadurch gekennzeichnet,**
**daß** der Abgastemperatur-Schwellwert in Abhängigkeit der Umgebungstemperatur festgelegt wird.

7. Vorrichtung zur Abgastemperaturerhöhung bei einem Verbrennungsmotor mit einer Katalysatoreinrichtung und einer Kraftstoffdirekteinspritzung, einer die Luftzufuhr beeinflussende Drosseleinrichtung, einer Einrichtung zur Ermittlung der Abgastemperatur mittels einer Temperatursonde oder eines Temperaturmodells, wobei der Verbrennungsmotor zunächst im geschichteten Betrieb arbeitet,
**dadurch gekennzeichnet, daß**
- eine mit der Drosseleinrichtung und der Einrichtung zur Ermittlung der Abgastemperatur verbundene Steuereinrichtung vorgesehen ist, die bei Unterschreiten eines Abgastemperatur-Schwellwertes eine Drosselung des-Verbrennungsmotors zur Anhebung der Temperatur veranlasst und
- die Steuereinrichtung eine Einheit aufweist, die dann auf einen homogenen Betrieb des Verbrennungmotors umschaltet, wenn die Drosselung zur Anhebung der Abgastemperatur nicht ausreicht.

8. Vorrichtung nach Anspruch 7,
**dadurch gekennzeichnet,**
**daß** die Steuereinrichtung derart ausgebildet ist, daß die Drosselung zeitund/oder temperaturgesteuert erfolgt.

9. Vorrichtung nach Anspruch 7 oder 8,
**dadurch gekennzeichnet,**
**daß** im Abgasstrang Vorkatalysatoren vorgesehen sind und diesen Vorkatalysatoren Abgastemperatursensoren nachgeschaltet sind.

10. Vorrichtung nach einem der Ansprüche 7 bis 9,
**dadurch gekennzeichnet,**
**daß** den Vorkatalysatoren ein Speicherkatalysator nachgeschaltet ist, der mittes einer strömungsmäßig nachfolgenden Monitorsonde überwacht wird.

11. Vorrichtung nach einem der Ansprüche 7 bis 10,
**dadurch gekennzeichnet,**
**daß** die Steuereinrichtung ausgebildet ist, um ein Signal zur Verringerung des Vorsteuerwinkels auszugeben.

12. Vorrichtung nach einem der Ansprüche 7 bis 11,
**dadurch gekennzeichnet,**
**daß** die Steuereinrichtung zur Aufnahme und Berücksichtigung weiterer Fahrzeugbetriebsdaten oder Fahrzeugumgebungsdaten ausgebildet ist.

13. Vorrichtung nach Anspruch 12,
**dadurch gekennzeichnet**,
die Steuereinrichtung einen Eingang für ein der Umgebungstemperatur und/oder der Fahrgeschwindigkeit entprechendes Signal aufweist und derart ausgebildet ist, daß der Abgastemperatur-Schwellwert in Abhängigkeit von diesen Signalen bestimmt wird.

## Claims

1. A method for increasing the exhaust temperature in an internal-combustion engine with a catalytic converter, in which the fuel is injected directly, the fresh air supply is regulated by means of a throttle mechanism and the exhaust temperature is determined by means of a temperature probe or a temperature model, the combustion engine initially operating in stratified operation, **characterised in that**
- when an exhaust temperature threshold value is fallen below, the combustion engine is throttled to raise the exhaust temperature and
- a check is made as to whether throttling is sufficient to raise the temperature and, if not, a switch is made to homogeneous operation of the internal-combustion engine.

2. A method according to claim 1, **characterised in that** throttling is controlled by time and/or temperature.

3. A method according to claim 1 or 2, **characterised in that** a storage catalyst connected downstream from a precatalyst is monitored by a monitoring probe during the regeneration phase.

4. A method according to any one of the preceding claims, **characterised in that** the ignition angle is also reduced.

5. A method according to any one of the preceding claims, **characterised in that** the exhaust temperature threshold value is selected as a function of vehicle operating conditions or vehicle ambient conditions.

6. A method according to any one of the preceding claims, **characterised in that** the exhaust gas temperature threshold value is established as a function of the ambient temperature.

7. A device for increasing the exhaust temperature in an internal-combustion engine with a catalytic converter and direct fuel injection, a throttle mechanism influencing the air supply, a mechanism for determining the exhaust temperature by means of a temperature probe or a temperature model, the internal-combustion engine initially operating in stratified mode, **characterised in that**
- a control mechanism connected to the throttle mechanism and the mechanism for determining the exhaust temperature is provided which, in the event of an exhaust temperature threshold value being fallen below causes throttling of the internal-combustion engine to raise the temperature and
- the control mechanism has a unit which switches to homogeneous operation of the internal-combustion engine when throttling is not sufficient to raise the exhaust temperature.

8. A device according to claim 7, **characterised in that** the control mechanism is designed such that throttling is controlled by time and/or temperture.

9. A device according to claim 7 or 8, **characterised in that** precatalysts are provided in the exhaust line and exhaust temperature sensors are connected downstream from these precatalysts.

10. A device according to any one of claims 7 to 9, **characterised in that** a storage catalyst is connected downstream from the precatalysts, the storage catalyst being monitored by means of a monitoring probe which is downstream according to the flow.

11. A device according to any one of claims 7 to 10, **characterised in that** the control mechanism is designed to emit a signal to reduce the pre-control angle.

12. A device according to any one of claims 7 to 11, **characterised in that** the control mechanism is designed to receive and take into account further vehicle operating data or vehicle ambient data.

13. A device according to claim 12, **characterised in that** the control mechanism has an input for a signal corresponding to the ambient temperature and/or the driving speed and is designed such that the exhaust temperature threshold value is determined as a function of these signals.

## Revendications

1. Procédé pour l'élévation de la température des gaz d'échappement dans un moteur à combustion interne équipé d'un dispositif catalyseur, dans lequel le carburant est injecté en injection directe, l'alimentation d'air frais peut être réglée au moyen d'un dispositif d'étranglement et la température des gaz d'échappement est déterminée au moyen d'une sonde de température ou d'un modèle de température, le moteur à combustion interne travaillant initialement dans le fonctionnement stratifié,
**caractérisé en ce que**
- lorsqu'un seuil de température des gaz d'échappement est franchi dans le sens descendant, on a un étranglement du moteur à combustion interne pour élever la température des gaz d'échappement, et
- on vérifie si l'étranglement suffit pour l'élévation de la température et, dans la négative, on bascule sur un fonctionnement homogène du moteur à combustion interne.

2. Procédé selon la revendication 1,
**caractérisé en ce que**
l'étranglement s'effectue avec commande par le temps et/ou par la température.

3. Procédé selon la revendication 1 ou 2,
**caractérisé en ce qu'**
un catalyseur accumulateur placé en aval d'un pré-catalyseur est surveillé au moyen d'une sonde de contrôle pendant la phase de régénération.

4. Procédé selon une des revendications précédentes,
**caractérisé en ce qu'**
en supplément, on réduit l'angle d'allumage.

5. Procédé selon une des revendications précédentes,
**caractérisé en ce que**
le seuil de température des gaz d'échappement est choisi en fonction des conditions de fonctionnement du véhicule ou des conditions d'environnement du véhicule.

6. Procédé selon une des revendications précédentes,
**caractérisé en ce que**
le seuil de température des gaz d'échappement est fixé en fonction de la température de l'environnement.

7. Dispositif pour l'élévation de la température des gaz d'échappement dans un moteur à combustion interne équipé d'un dispositif catalyseur et d'une injection directe du carburant, d'un dispositif de détection de la température des gaz d'échappement utilisant une sonde de température ou un modèle de température, le moteur à combustion interne travaillant initialement dans le fonctionnement stratifié,
**caractérisé en ce qu'**
- un dispositif de commande relié au dispositif d'étranglement et au dispositif de détection de la température des gaz d'échappement, lorsque le seuil de température des gaz d'échappement est franchi dans le sens descendant, provoque un étranglement du moteur à combustion interne pour élever la température, et
- le dispositif de commande comprend une unité qui bascule sur un fonctionnement homogène du moteur à combustion interne lorsque l'étranglement n'est pas suffisant pour élever la température des gaz d'échappement.

8. Dispositif selon la revendication 7,
**caractérisé en ce que**
le dispositif de commande est constitué de manière que l'étranglement s'effectue avec commande par le temps et/ou la température.

9. Dispositif selon la revendication 7 ou 8,
**caractérisé en ce que**
des pré-catalyseurs sont prévus dans la ligne des gaz d'échappement et des capteurs de température des gaz d'échappement sont montés en aval de ces pré-catalyseurs.

10. Dispositif selon une des revendications 7 à 9,
**caractérisé en ce que**
en aval des pré-catalyseurs, est placé un catalyseur accumulateur qui est surveillé au moyen d'une sonde de contrôle placée en aval par référence au sens de l'écoulement.

11. Dispositif selon une des revendications 7 à 10,
**caractérisé en ce que**
le dispositif de commande est conçu pour émettre un signal pour la réduction de l'angle de commande de l'avance.

12. Dispositif selon une des revendications 7 à 11,
**caractérisé en ce que**
le dispositif de commande est conçu pour recevoir et prendre en compte d'autres données de fonctionnement du véhicule ou données de l'environnement du véhicule.

13. Dispositif selon la revendication 12,
**caractérisé en ce que**
le dispositif de commande présente une entrée pour un signal correspondant à la température de l'environnement et/ou à la vitesse du véhicule et est conçu de manière que le seuil de température des gaz d'échappement soit déterminé en fonction de ces signaux.
